# EUROPEAN PATENT APPLICATION

(11) **EP 2 685 369 A2**
(43) Date of publication of application: **15.01.2014**
(21) Application number: 13176287.4
(22) Date of filing: 12.07.2013
(51) Int. Cl.: G06F 3/0488, G06F 1/16, G06F 3/01, G06F 3/0346

(54) **Method and mobile device for adjusting size of touch input window**

(30) Priority: 12.07.2012 KR 20120076216
(71) Applicant: Samsung Electronics Co., Ltd, Gyeonggi-do 443-742 (KR)
(72) Inventor: Lee, Bumjun, 443-742 Gyeonggi-do (KR)
(74) Representative: Nederlandsch Octrooibureau

(57) **Abstract**

A method and a mobile terminal for adjusting the size of a touch input window is provided. The mobile device displays a first touch input window and detects at least one motion input for adjusting the size of the first touch input window. The mobile device displays a second touch input window that results from a size adjustment of the first touch input window according to the detected motion input.

## Description

### BACKGROUND OF THE INVENTION

### 1. Field of the Invention:

The present invention relates to a touch interface of a mobile device. More particularly, the present invention relates to a method and apparatus for adjusting the size of a touch input window in a mobile device having a touch screen.

### 2. Description of the Related Art:

Recently, with the remarkable growth of communication technologies, a great variety of mobile devices such as smart phones, tablet Personal Computers (PCs), and the like are becoming increasingly popular. Such mobile devices tend to have a large-sized display, yet remain portable. To meet such conflicting tendencies, a full touch screen, in which a lightweight touch panel completely covers the front of the mobile device, is usually used.

However, a mobile device having a large-sized display often causes an inconvenience to a user. For example, there are times when a user is able to grip his or her mobile device with only one hand and yet must manipulate the touch screen with the same hand. In such situations, a user may have difficulty in touching every point on the touch screen due to a large-sized display. Accordingly, there is a need for an improved apparatus and method for adjusting the size of a touch input window for receiving a user's input.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address the above-mentioned problems and/or disadvantages and to provide at least the advantages described below. Accordingly, an aspect of the present invention is to provide a mobile device with a technique to adjust the size of a touch input window for receiving a user's touch input.

Another aspect of the present invention is to provide a technique capable of easily adjusting the size of a touch input window in response to a simple motion input in a mobile device.

According to an aspect of the present invention, a method for adjusting the size of a touch input window in a mobile device is provided. The method includes displaying a first touch input window, detecting at least one motion input for adjusting the size of the first touch input window, and displaying a second touch input window that results from a size adjustment of the first touch input window according to the detected motion input.

According to another aspect of the present invention, a mobile device for adjusting the size of a touch input window is provided. The mobile device includes a display unit, a detection unit, and a control unit. The display unit is configured to selectively display one of a first touch input window and a second touch input window. The detection unit is configured to detect at least one motion input for adjusting the size of the first touch input window displayed on the display unit. The control unit is configured to adjust the size of the first touch input window according to the detected motion input, and to enable the display unit to display, instead of the first touch input window, the second touch input window that results from a size adjustment of the first touch input window.

As discussed above, the mobile device adjusts the size of the first touch input window in response to the detected motion input and displays the second touch input window that results from a size adjustment of the first touch input window. This allows a user to more easily use a touch input window with a desired size.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:

FIG. 1 is a block diagram illustrating a mobile device in accordance with an exemplary embodiment of the present invention.

FIGS. 2A and 2B are screenshots of a default touch input window which is displayed fully on a screen of the mobile device in accordance with exemplary embodiments of the present invention.

FIGS. 3A and 3B are screenshots of a size-adjusted touch input window which is weighted towards one side of a screen of the mobile device in accordance with exemplary embodiments of the present invention.

FIGS. 4A and 4B are screenshots showing a size-adjusted touch input window which is weighted towards one side of a screen of the mobile device in accordance with exemplary embodiments of the present invention.

FIGS. 5A and 5B are views showing a size adjustment of a touch input window in response to the first directional tilt input in accordance with exemplary embodiments of the present invention.

FIGS. 6A and 6B are views showing a size adjustment of a touch input window in response to the second directional tilt input in accordance with exemplary embodiments of the present invention.

FIG. 7 is a view showing a further size adjustment of a touch input window in response to variation of a tilt input in accordance with exemplary embodiments of the present invention.

FIGS. 8A to 8D are views showing a size adjustment of a touch input window in response to an acceleration input in accordance with exemplary embodiments of the present invention.

FIG. 9 is a flow diagram illustrating a method for adjusting the size of a touch input window in response to a motion input in accordance with exemplary embodiments of the present invention.

FIG. 10 is a flow diagram illustrating a method for reducing the size of a touch input window in response to a motion input in accordance with exemplary embodiments of the present invention.

FIG. 11 is a flow diagram illustrating a method for restoring a touch input window to a default touch input window in accordance with exemplary embodiments of the present invention.

Throughout the drawings, it should be noted that like reference numbers are used to depict the same or similar elements, features, and structures.

### DETAILED DESCRIPTION OF THE INVENTION

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

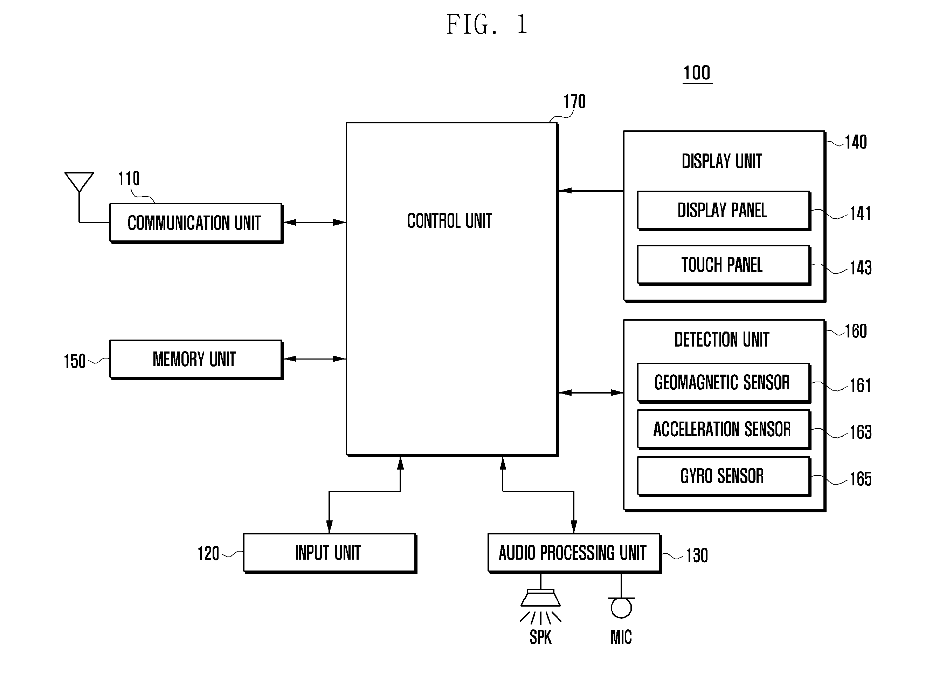

FIGS. 1 through 11, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly stated otherwise. A set is defined as a non-empty set including at least one element.

Furthermore, well known or widely used techniques, elements, structures, and processes may not be described or illustrated to avoid obscuring the essence of the present invention. Although the drawings represent exemplary embodiments of the invention, the drawings are not necessarily to scale and certain features may be exaggerated or omitted in order to better illustrate and explain the present invention.

According to an exemplary aspect of the invention, a touch input window is defined as a touch input region that has the ability to receive a user's touch input (the first definition). For example, the touch input window according to the first definition includes an input window used in a Short Messaging Service (SMS), a Multimedia Messaging Service (MMS), a Social Networking Service (SNS), a messenger, e-mail applications, and the like, an input window of a web browser, an input window of a memo function, a scheduler function, a dictionary application, and the like, and a keyboard window of a word processor, and the like. Such input windows may be formed of a soft (i.e., virtual) keypad or keyboard that contains a plurality of letters, numerals, symbols, emoticons, and the like. Additionally, the touch input window may be an initial screen which may be in a lock state and ready to receive a user's unlock gesture such as an action with a predefined pattern or a push action. Also, the touch input window may be any touch-sensitive region used in a music player, a video player, an image viewer, a game application, and the like. In this case, the touch input window may be formed of a touch map and outputted at a specific position on a display unit.

According to another exemplary aspect of this invention, a touch input window is defined as a combination of a touch input region that has the ability to receive a user's touch input, and a touch feedback region that provides any output or feedback in response to or in connection with a touch input (the second definition). More specifically, the touch feedback region may include an output region for displaying an output in response to a user's touch input, any information received from the other party, any information provided by a service provider or a communication operator, and the like. In an exemplary implementation, the touch input window may be determined according to one of the first and second definitions, depending on user's selection or manufacturer's selection.

In exemplary implementations, the first touch input window is defined as a touch input window that is displayed on the screen before its size is adjusted, and the second touch input window is defined as a touch input window that has an adjusted size resulting from any motion input. According to an exemplary embodiment, the first touch input window is a full touch input window (also referred to as a default touch input window) displayed on the entire screen, and the second touch input window is a size-reduced touch input window displayed on a part of the screen in response to any motion input. According to another exemplary embodiment, the first touch input window is a size-reduced touch input window displayed on a part of the screen, and the second touch input window is a size-enlarged touch input window displayed on increasing parts of the screen or a default touch input window displayed on the entire screen in response to any motion input. In this invention, the first touch input window may be selected as one of a full (i.e., default) touch input window and a size-reduced touch input window by a user or a manufacturer. Similarly, the second touch input window may be selected as one of a size-reduced touch input window and a full (i.e., default) touch input window by a user or a manufacturer.

Now, exemplary embodiments of the present invention will be described in more detail.

FIG. 1 is a block diagram illustrating a mobile device in accordance with an exemplary embodiment of the present invention.

Referring to FIG. 1, the mobile device 100 includes a communication unit 110, an input unit 120, an audio processing unit 130, a display unit 140, a memory unit 150, a detection unit 160, and a control unit 170.

Additionally, the detection unit 160 may include a geomagnetic sensor 161, an acceleration sensor 163, and a gyro sensor 165. Each of these sensors 161, 163 and 165 detects a motion input (i.e., a move and rotation of the mobile device) resulting from a user gesture and sends the detected motion input to the control unit 170. For example, the gyro sensor 165 detects tilts of the mobile device with regard to three axes (i.e., x-axis or longitudinal axis drawn from front to rear, y-axis or lateral axis running from left to right, z-axis or vertical axis drawn from top to bottom) and rotations of the mobile device about the respective axes. Normally rolling refers to the rotation about the x-axis, pitching refers to the rotation about the y-axis, and yawing refers to the rotation about the z-axis. The acceleration sensor 163 detects the acceleration of the mobile device and outputs it to the control unit 170. The geomagnetic sensor 161 detects four cardinal directions of north, south, east and west and outputs them to the control unit 170. The geomagnetic sensor 161 may perform a function to calibrate a directional error of the gyro sensor 165 and to detect the rotational acceleration by assisting the acceleration sensor 163.

The communication unit 110 is configured to support a communication function of the mobile device 100. That is, the communication unit 110 is included in the mobile device 100 that performs a communication function, but not included in the mobile device 100 that does not perform a communication function. The communication unit 110 may be activated at a user's request, and at this time a virtual key map such as a control key map for controlling the communication unit 110 may be outputted on the display unit 140. Meanwhile, in order to support a mobile communication function of the mobile device 100, the communication unit 110 may be formed of a mobile communication module which establishes a communication channel with a mobile communication system. For example, the communication unit 110 may selectively establish one of a voice service channel, a video service channel, and a data service channel with a mobile communication system.

The input unit 120 is configured to create a variety of input signals required for the operation of the mobile device 100. The input unit 120 may be formed of various input devices such as a keyboard, a keypad, a key button, and the like. Additionally, if the display unit 140 is provided in the form of a touch screen, the input unit 120 may be formed of a touch map that is virtually outputted on the touch screen. More particularly, the input unit 120 may have a variety of special forms and layouts in connection with a touch input window of this invention. For example, the input unit 120 may be formed of a touch input window that includes at least one of a 3*4 key map, a 5*4 key map, a qwerty key map, a Dvorak key map, and the like. Alternatively, the input unit 120 may be formed of a touch input window that includes at least one of a control key map for music play, a control key map for video playback, a control key map for broadcast reception, a control key map for unlock of the mobile device 100, and the like. Such touch input windows may be displayed on the display unit 140, while being partially weighted towards one side of the screen and having modified layout and position of keys.

The audio processing unit 130 may output audio data associated with the operation of the mobile device 100, audio data associated with playback of an audio file stored in the memory unit 150, audio data received from the outside, and the like. The audio processing unit 130 may also support an audio data collecting function. For this, the audio processing unit 130 may include a speaker (SPK) and a microphone (MIC). More particularly, the audio processing unit 130 may output sound effects, notification or feedback sounds, and the like. For example, the audio processing unit 130 may output a notification sound which tells a user that a motion input is successively detected, that the size of the first touch input window is adjusted, or that the second touch input window is displayed resulting from a size adjustment of the first touch input window. Additionally, when a display position of the touch input window is changed from one side to other side on the screen, when the size of the touch input window is reduced or enlarged, or when the type of the touch input window is changed, the audio processing unit 130 may output related sound effects or feedback sound. Also, when a specific key is selected in the touch input window, the audio processing unit 130 may output related sound effects or feedback sound. The output of sound effects, notification or feedback sound may be omitted according to user's setting or designer's intention.

The display unit 140 is configured to provide various screen interfaces required for the operation of the mobile device 100. For example, the display unit 140 may provide an initial screen (also referred to as a home screen or an idle screen), a menu screen, and the like. The display unit 140 may have a touch panel 143 and a display panel 141. The touch panel 143 may have a size equal to or greater than that of the display panel 141, thus offering a full touch screen. The display unit 140 may provide a default touch input window, the first touch input window or the second touch input window as discussed above. Examples of such screens will be described in more detail later.

The memory unit 150 may store a basic operating system and various programs, applications, algorithms and data required for or associated with the operation of the mobile device 100. Additionally, the memory unit 150 may store specific applications or programs for outputting various default touch input windows to the display unit 140, for adjusting the size of the first touch input window to create the second touch input window in response to a motion input, and for supporting the operation of a motion input. More particularly, both or either of the aforesaid first and second definitions may be stored as a default or as selections in a setting menu. Also, the memory unit 150 may store a mapping relation between types of a motion input and adjusting forms of a touch input window. If a motion input is a tilt input, the memory unit 150 may store a specific program for gradually reducing or enlarging the first touch input window according to the degree of tilt. If a motion input is an acceleration input, the memory unit 150 may store one or more predetermined values or threshold values and a related program used to select, reduce or enlarge the size of a touch input window according to a detected acceleration input. Such predetermined values or threshold values may be defined or experimentally determined as default values or according to a user's or manufacturer's selection.

The control unit 170 is configured to control the flow of signals required for the operation of the mobile device 100. More particularly, the control unit 170 controls signal delivery, signal processing and power distribution required for display of a touch input window on the display unit 140. For example, the control unit 170 may output various types of default touch input windows to the display unit 140 according to predetermined schedule information stored in the memory unit 150 or depending on the type of selected application. Also, the control unit 170 may control a user function in response to an input signal received through a touch input window. More particularly, the control unit 170 may adjust the size of the first touch input window in response to a motion input detected by the detection unit 160 and output the size-adjusted second touch input window to the display unit 140. Now, related examples will be described.

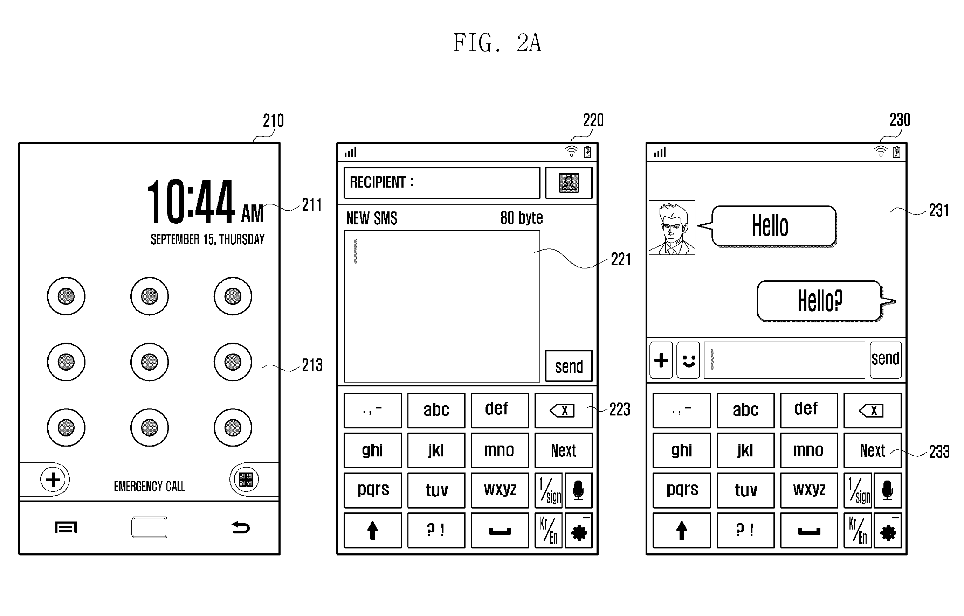

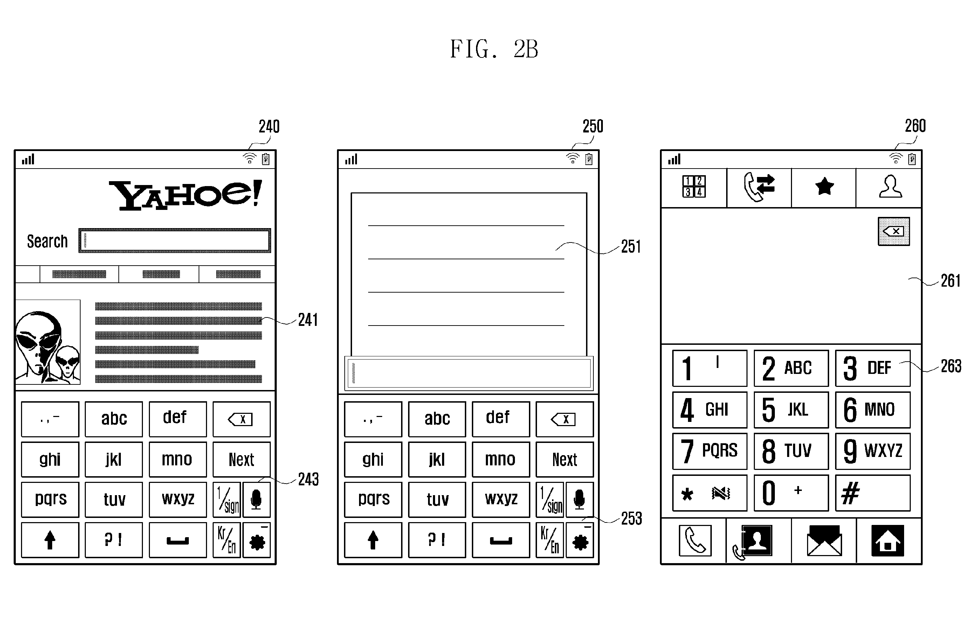

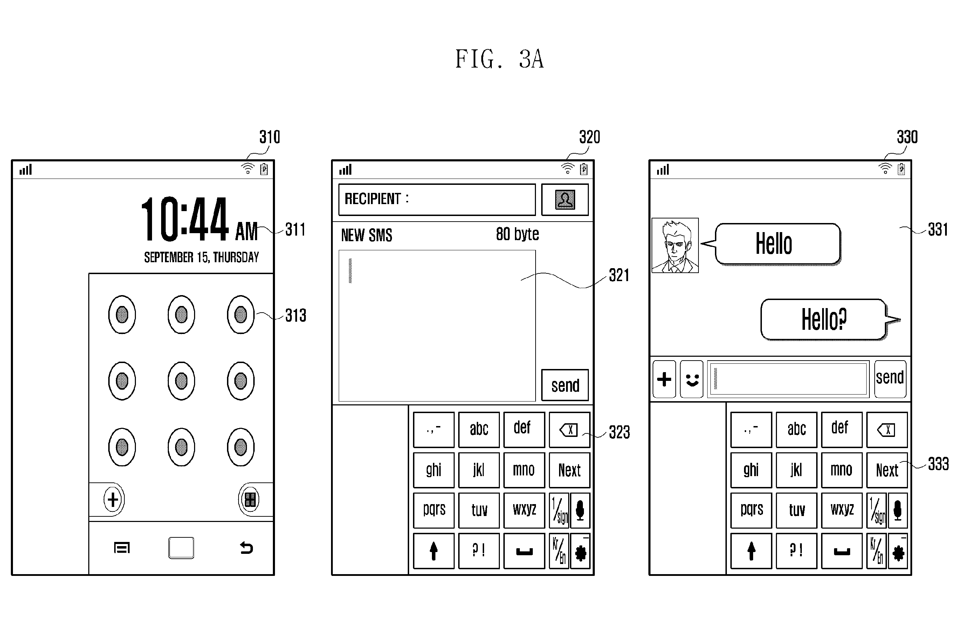

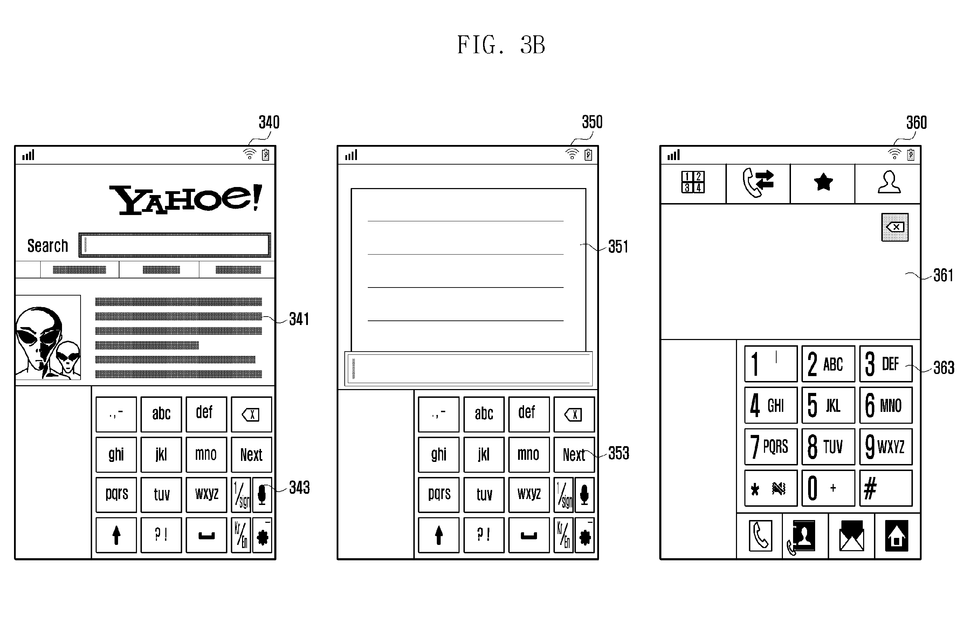

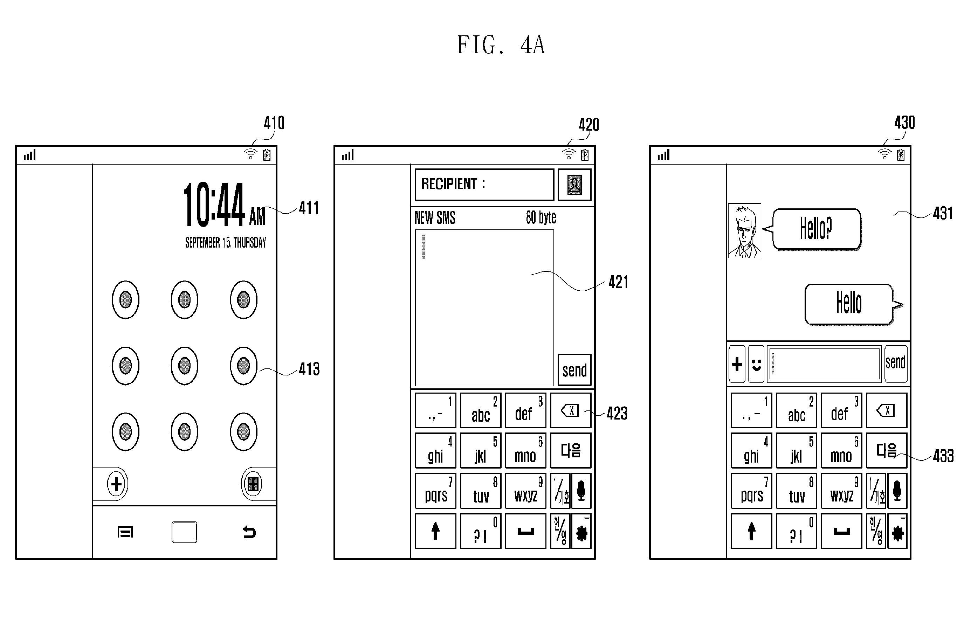

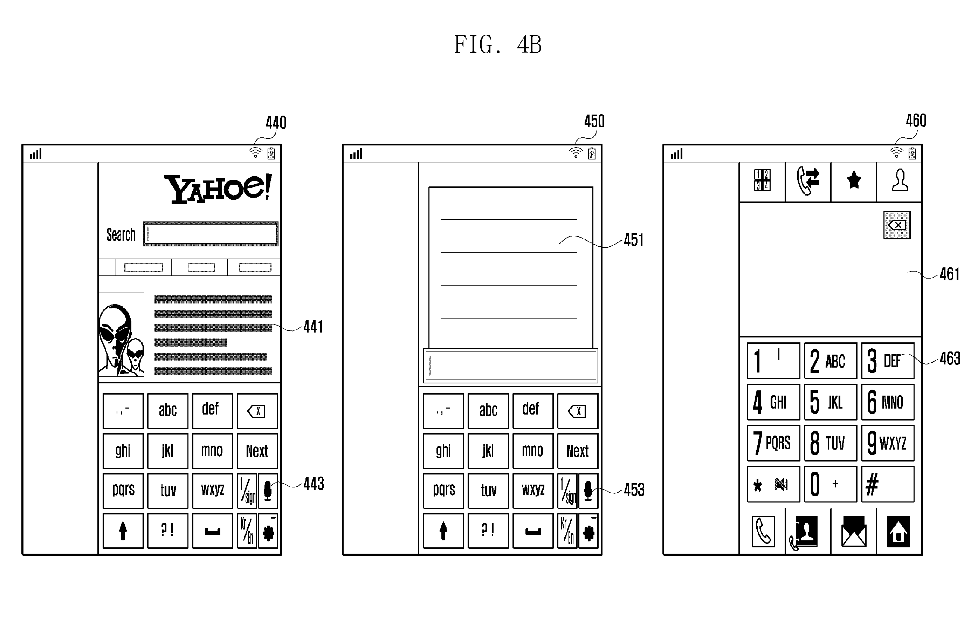

FIGS. 2A, 2B, 3A, 3B, 4A and 4B show various examples of touch input windows displayed on the display unit 140 of the mobile device 100. More Specifically, FIGS. 2A and 2B are screenshots of a default touch input window which is displayed fully on a screen of the mobile device in accordance with exemplary embodiments of the present invention. FIGS. 3A and 3B are screenshots of a size-adjusted touch input window which is weighted towards one side of a screen of the mobile device in accordance with embodiments of the present invention. FIGS. 4A and 4B are screenshots of a size-adjusted touch input window which is weighted towards one side of a screen of the mobile device in accordance with embodiments of the present invention.

Referring to FIGS. 2A and 2B, FIG. 2A shows a locked initial screen 210, an SMS creating screen 220, and a messenger chatting screen 230, and FIG. 2B shows a web browser screen 240, a memo application screen 250, and an outgoing call screen 260. These screens correspond to various types of default touch input windows which are selectively displayed on the display unit 140 according to predetermined schedule information stored in the memory unit 150 or depending on the type of selected application. In an exemplary embodiment, each of these screens contains the first touch input window before a motion input is detected. In another exemplary embodiment, each of these screens corresponds to the second touch input window that results from enlargement of the size-reduced first touch input window in response to a motion input.

More specifically, according to the first definition, a touch input window corresponds to a touch input region only such as a pattern input region 213 in the locked initial screen 210, a message input region 223 in the SMS creating screen 220, a chat input region 233 in the messenger chatting screen 230, a query input region 243 in the web browser screen 240, a memo input region 253 in the memo application screen 250, and a recipient number input region 263 in the outgoing call screen 260.

Meanwhile, according to the second definition, a touch input window corresponds to a combination of the above-mentioned touch input region 213, 223, 233, 243, 253 or 263 and a touch feedback region 211, 221, 231, 241, 251 or 261, namely, substantially the entire screen displayed on the display unit 140 such as the locked initial screen 210, the SMS creating screen 220, the messenger chatting screen 230, the web browser screen 240, the memo application screen 250, and the outgoing call screen 260.

Referring to FIGS. 3A and 3B, FIGS. 3A and 3B show that a touch input region 313, 323, 333, 343, 353 or 363 only is reduced in size according to the first definition. In contrast, a touch feedback region such as a basic information display region 311, a message display region 321, a chat display region 331, a webpage display region 341, a memo display region 351, or a dialing display region 361 is not reduced in size.

Like FIGS. 2A and 2B, FIG. 3A shows a locked initial screen 310, an SMS creating screen 320, and a messenger chatting screen 330, and FIG. 3B shows a web browser screen 340, a memo application screen 350, and an outgoing call screen 360.

More particularly, according to an exemplary embodiment, FIGS. 3A and 3B show the second touch input windows 313, 323, 333, 343, 353 and 363 each of which results from a size reduction of the first touch input windows (e.g., the default touch input windows shown in FIGS. 2A and 2B) in response to a motion input and also weighted towards one side of the screen on the display unit 140. According to another exemplary embodiment, touch input windows shown in FIGS. 3A and 3B may be the size-reduced first touch input windows which will be enlarged in response to a motion input.

Referring to FIGS. 4A and 4B, FIGS. 4A and 4B show that a touch feedback region 411, 421, 431, 441, 451 or 461 as well as a touch input region 413, 423, 433, 443, 453 or 463 are reduced together in size according to the second definition.

Like the preceding figures, FIG. 4A shows a locked initial screen 410, an SMS creating screen 420, and a messenger chatting screen 430, and FIG. 4B shows a web browser screen 440, a memo application screen 450, and an outgoing call screen 460.

More particularly, according to an exemplary embodiment, FIGS. 4A and 4B show the second touch input windows each of which results from a size reduction of the first touch input windows (e.g., the default touch input windows shown in FIGS. 2A and 2B) in response to a motion input and also weighted towards one side of the screen on the display unit 140. According to another exemplary embodiment, touch input windows shown in FIGS. 4A and 4B may be the size-reduced first touch input windows which will be enlarged in response to a motion input.

Hereinafter, based on the first definition regarding a touch input window, exemplary embodiments of this invention will be described.

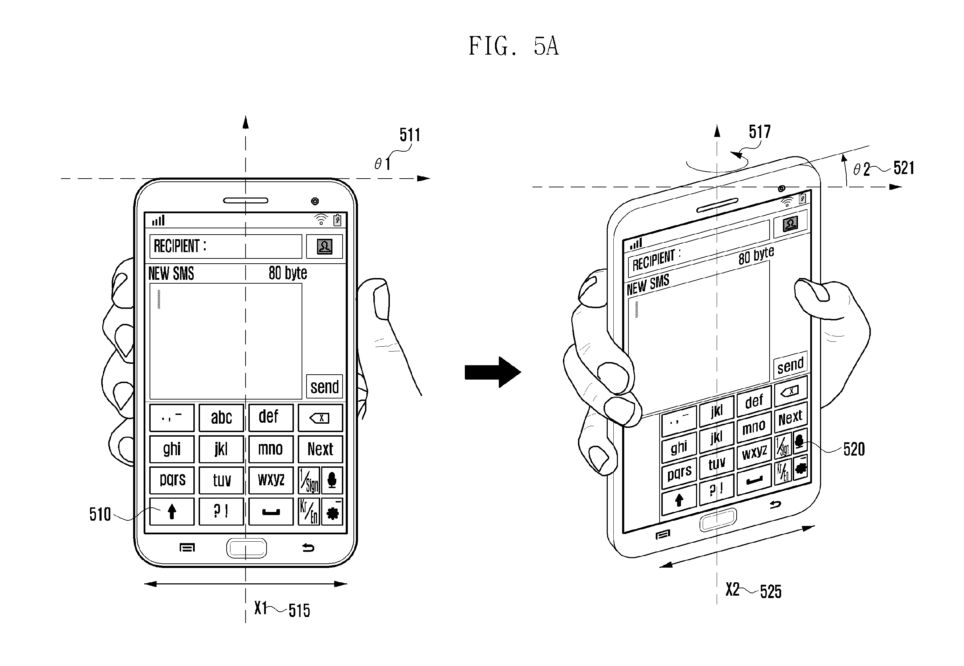

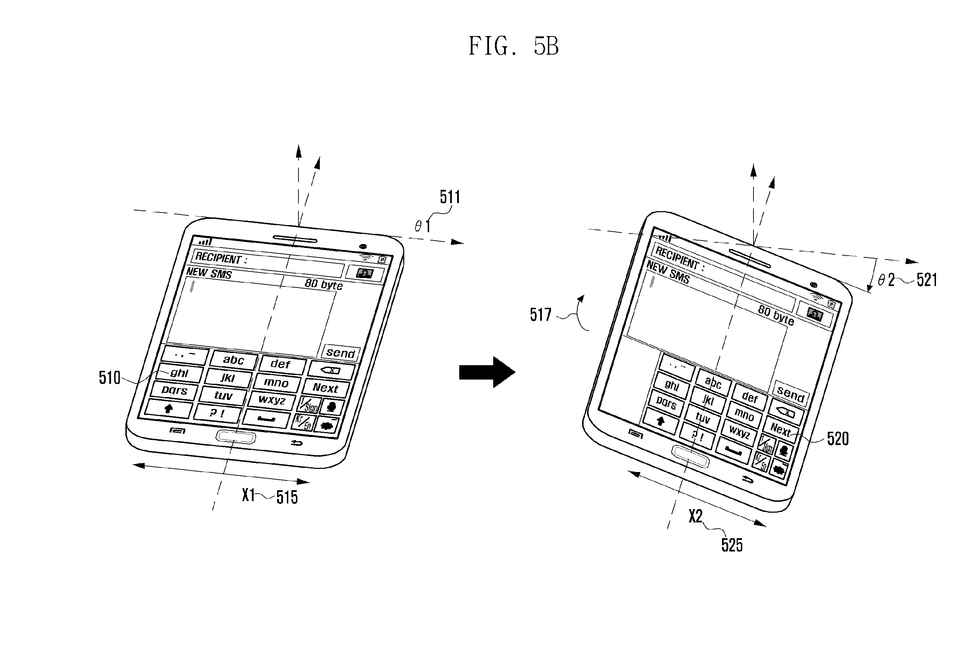

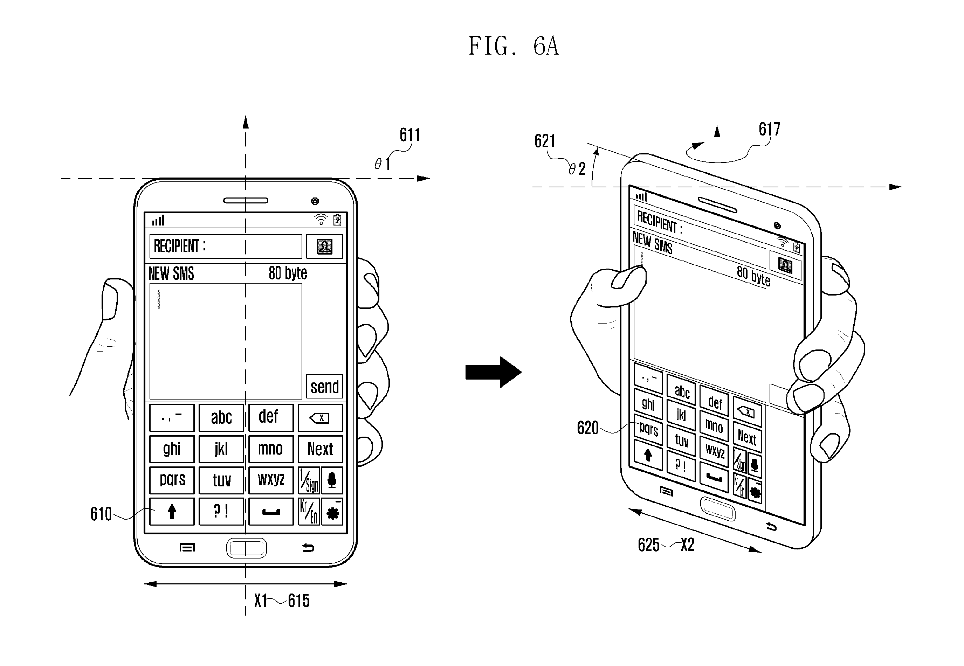

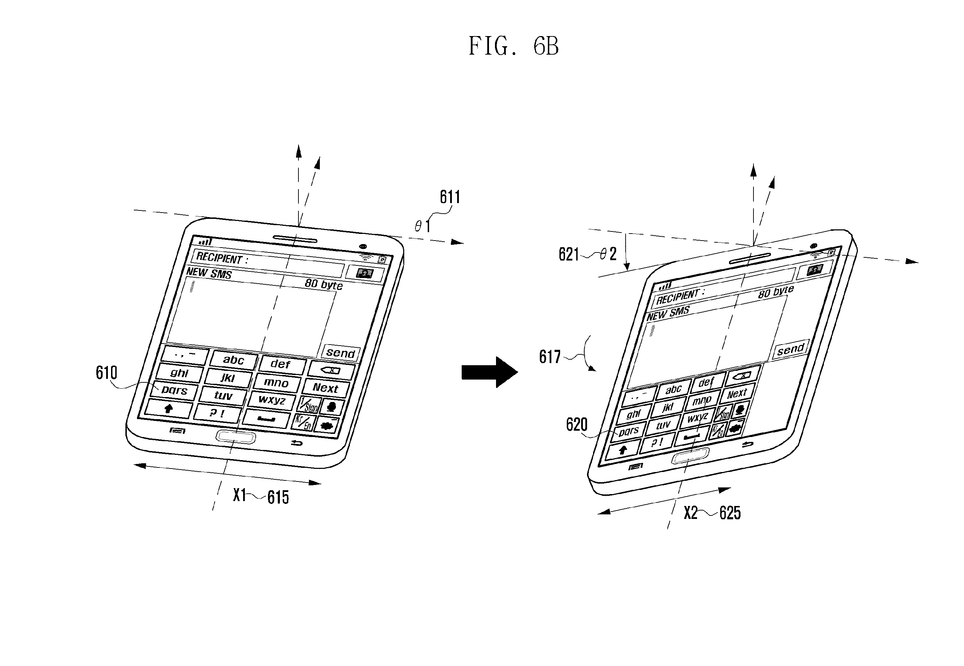

FIGS. 5A and 5B are views showing a size adjustment of a touch input window in response to the first directional tilt input in accordance with exemplary embodiments of the present invention. FIGS. 6A and 6B are views showing a size adjustment of a touch input window in response to the second directional tilt input in accordance with exemplary embodiments of the present invention.

Referring to FIG. 5A, before the detection unit 160 of the mobile device 100 detects a tilt input 517, the display unit 140 displays the first touch input window 510. When the tilt input 517 is detected, the display unit 140 displays the size-reduced second touch input window 520.

Prior to the tilt input 517, the first touch input window 510 remains in a horizontal state without any tilt. Namely, a tilt angle (θ1) 511 is zero. A size (X1) 515 of the first touch input window 510 is equal to that of the default touch input window. If the tilt input 517 occurs, a tilt angle (θ1) 511 is changed to a tilt angle (θ2) 521. A tilt refers to the descent of one lateral side of the mobile device 100 from the horizontal. When there is an increase of tilt angle from a tilt angle (θ1) 511 to a tilt angle (θ2) 521, the detection unit 160 of the mobile device 100 detects it and thereby the control unit 170 enables the display unit 140 to display the second touch input window 520 with a size (X2) 525 which is reduced from a size (X1) 515 of the first touch input window 510. Additionally, the second touch input window 520 is weighted towards the right side of the screen on the display unit 140, depending on a tilt direction.

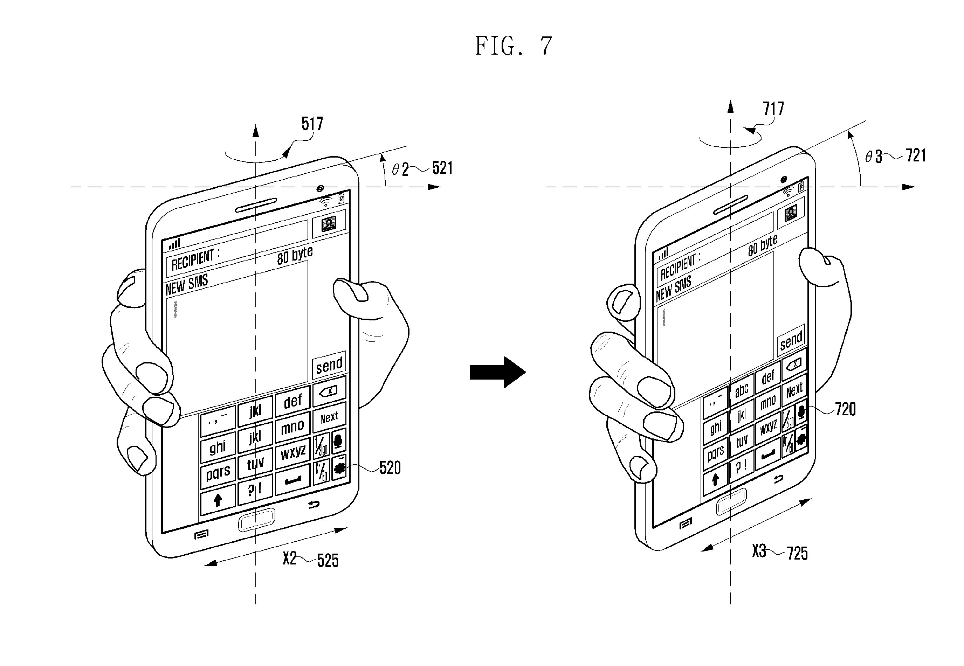

FIG. 5B shows, from another viewpoint, the same view as shown in FIG. 5A. If the tilt input 517 increases continuously, the tilt angle (θ2) 521 increases accordingly, and the size (X2) 525 of the second touch input window 520 is reduced accordingly. A size adjustment of the second touch input window in response to variation of a tilt input will be described below with reference to FIG. 7.

Referring to FIG. 6A, before the detection unit 160 of the mobile device 100 detects a tilt input 617, the display unit 140 displays the first touch input window 610. When the tilt input 617 is detected, the display unit 140 displays the size-reduced second touch input window 620.

Prior to the tilt input 617, the first touch input window 610 remains in a horizontal state without any tilt. Namely, a tilt angle (θ1) 611 is zero. A size (X1) 615 of the first touch input window 610 is equal to that of the default touch input window. If the tilt input 617 occurs, a tilt angle (θ1) 611 is changed to a tilt angle (θ2) 621. When there is an increase of tilt angle from a tilt angle (θ1) 611 to a tilt angle (θ2) 621, the detection unit 160 of the mobile device 100 detects it and thereby the control unit 170 enables the display unit 140 to display the second touch input window 620 with a size (X2) 625 which is reduced from a size (X1) 615 of the first touch input window 610. Additionally, the second touch input window 620 is weighted towards the left side of the screen on the display unit 140, depending on a tilt direction.

FIG. 6B shows, from another viewpoint, the same view as shown in FIG. 6A. If the tilt input 617 increases continuously, the tilt angle (θ2) 621 increases accordingly, and the size (X2) 625 of the second touch input window 620 is reduced accordingly.

The above-discussed exemplary embodiment with reference to FIGS. 5A, 5B, 6A and 6B illustrates a case where a tilt angle increases in a tilt direction. According to an alternative exemplary embodiment, if a tilt angle decreases in a tilt direction when the size-reduced first touch input window is weighted towards one side of the screen on the display unit 140, the size of the first touch input window is enlarged towards the other side of the screen. Namely, in response to any tilt input in the opposite direction of a current tilt direction, the tilt angle (θ2) 512 or 621 decreases and the size (X2) 525 or 625 of the second touch input window is enlarged.

FIG. 7 is a view showing a further size adjustment of a touch input window in response to variation of a tilt input in accordance with exemplary embodiments of the present invention.

FIG. 7 shows that a tilt angle of the mobile device 100 increases from a tilt angle (θ2) 521 to a tilt angle (θ3) 721. A tilt angle (θ2) 521 is greater than zero, and a tilt angle (θ3) 721 is greater than a tilt angle (θ2) 521. Notably, tilt angle (θ3) 721 corresponds to tilt input 717.

Referring to FIG. 7, as a tilt angle further increases from a tilt angle (θ2) 521 to a tilt angle (θ3) 721, a size (X2) 525 of the second touch input window 520 is further reduced to a size (X3) 725 of the second touch input window 720. Namely, in response to additional variation of a tilt input, the size of the second touch input window is further reduced.

In contrast, if a tilt angle decreases from a tilt angle (θ3) 721 to a tilt angle (θ2) 521, the size of the touch input window is enlarged from a size (X3) 725 to a size (X2) 525. If a tilt angle continuously decreases to the zero, the touch input window will be enlarged to the maximum as shown in the left view of FIG. 5A. As such, a user who desires to enlarge the size-reduced touch input window may tilt the mobile device in the opposite direction of a current tilt direction.

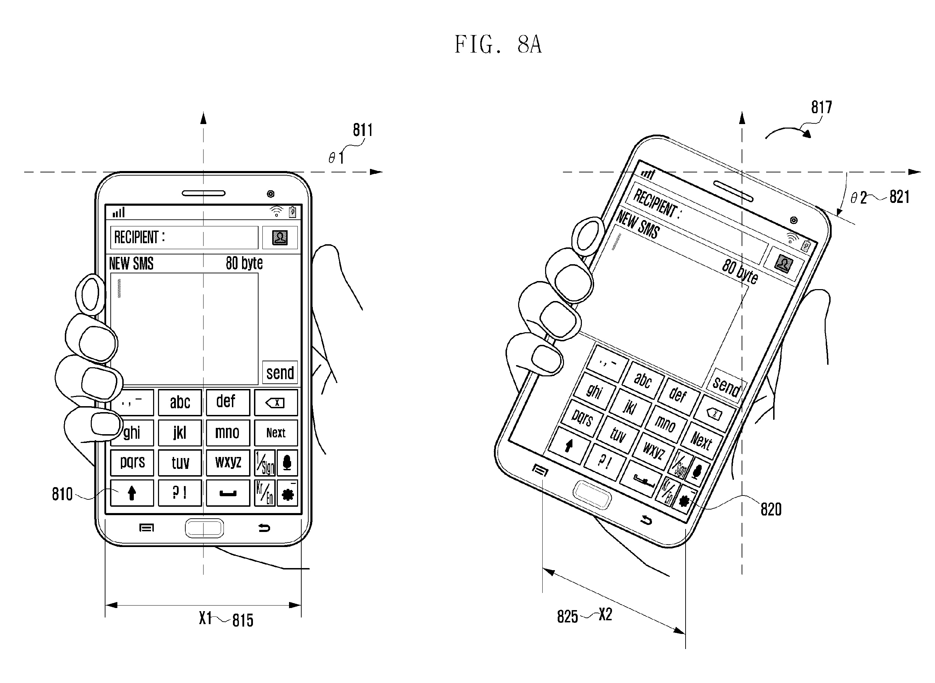

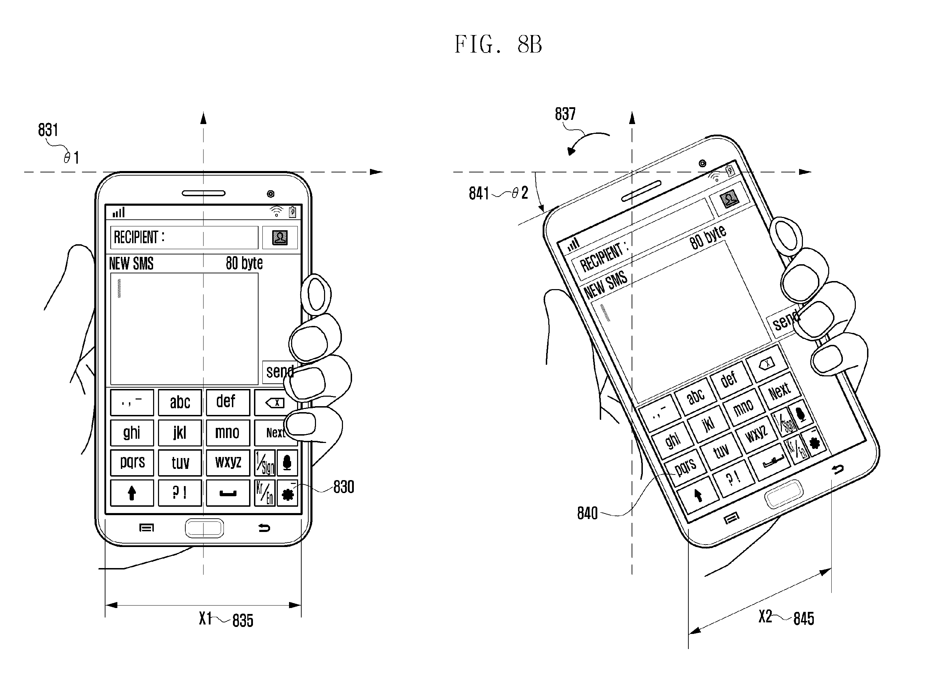

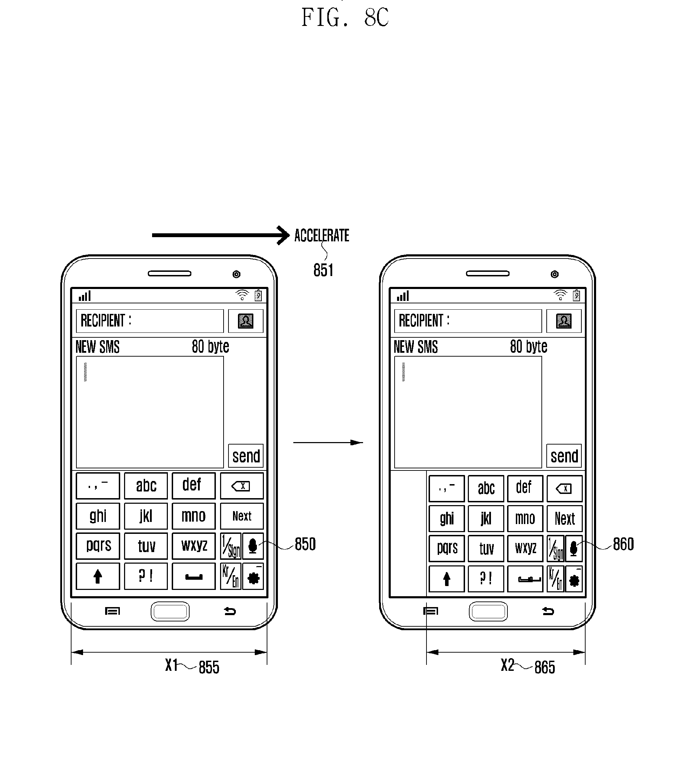

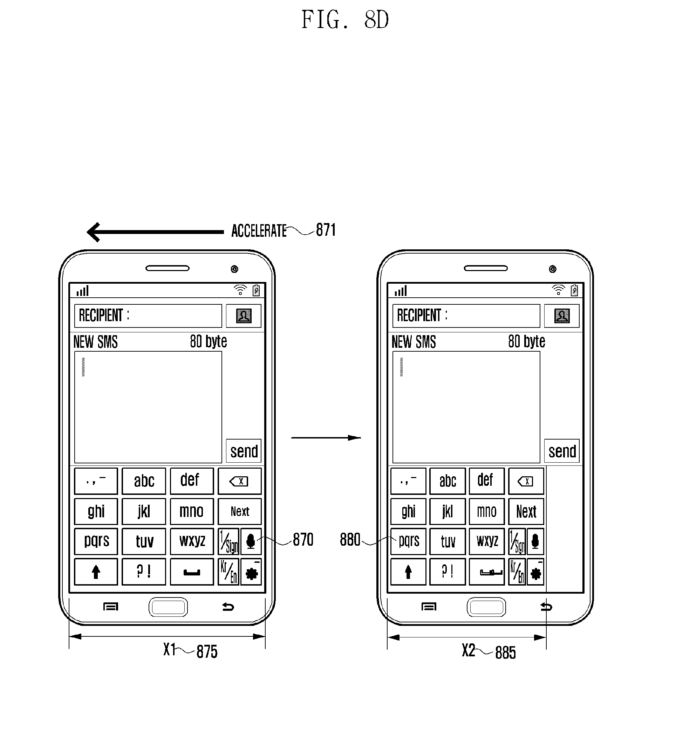

FIGS. 8A to 8D are views showing a size adjustment of a touch input window in response to an acceleration input in accordance with exemplary embodiments of the present invention. Especially, FIGS. 8A and 8B show a case of a rotational acceleration input, and FIGS. 8C and 8D show a case of a straight acceleration input.

Referring to FIG. 8A, before a rotational acceleration input 817 occurs, the mobile device 100 has an angle (θ1) 811 of zero. At this time, the display unit 140 displays the first touch input window 810 that has a size (X1) 815 equal to that of the default touch input window. When the rotational acceleration input 817 occurs in a clockwise direction, namely, when an angle (θ1) 811 is increased to an angle (θ2) 821, the display unit 140 displays the size-reduced second touch input window 820 that has a size (X2) 825 reduced from a size (X1) 815 and is weighted towards the right side of the screen.

Referring to FIG. 8B, before a rotational acceleration input 837 occurs, the mobile device 100 has an angle (θ1) 831 of zero. If a rotational acceleration input 837 occurs in a counterclockwise direction, the mobile device 100 has an angle 841 of θ2 and the display unit 140 displays the size-reduced second touch input window 840 that has a size (X2) 845 reduced from a size (X1) 835 of the first touch input window 830 and is weighted towards the left side of the screen.

Referring to FIG. 8C, if a rightward straight acceleration input 851 occurs, namely, if the mobile device 100 is accelerated to the right, the first touch input window 850 is reduced in size and thus the size-reduced second touch input window 860 is displayed towards the right side of the screen on the display unit 140. That is, the size-reduced second touch input window 860 that has a size (X2) 865, reduced from a size (X1) 855 of the first touch input window 850, is displayed and is weighted towards the right side of the screen.

Referring to FIG. 8D, if a leftward straight acceleration input 871 occurs, namely, if the mobile device 100 is accelerated to the left, the first touch input window 870 is reduced in size and thus the size-reduced second touch input window 880 is displayed towards the left side of the screen on the display unit 140. That is, the size-reduced second touch input window 880 that has a size (X2) 885, reduced from a size (X1) 875 of the first touch input window 870, is displayed and is weighted towards the left side of the screen.

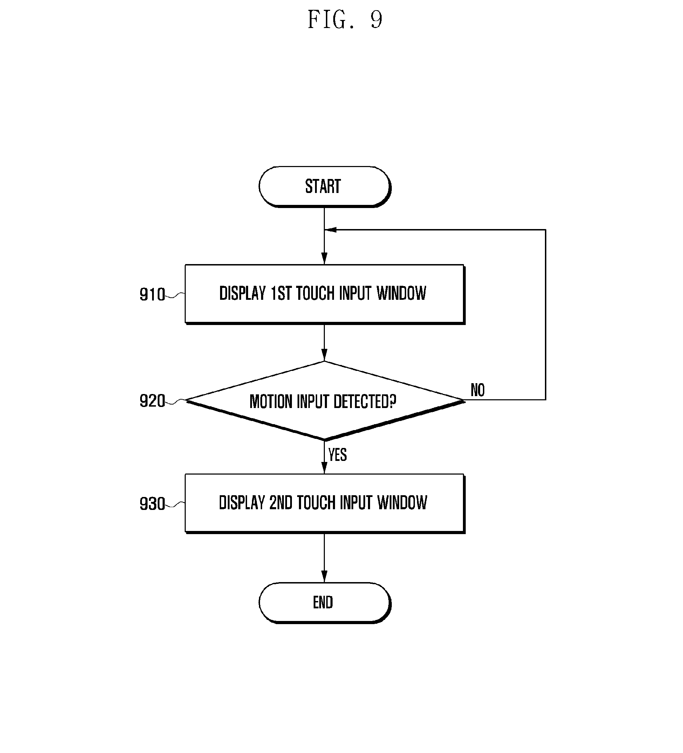

FIG. 9 is a flow diagram illustrating a method for adjusting the size of a touch input window in response to a motion input in accordance with exemplary embodiments of the present invention.

Referring to FIG. 9, at step 910, the control unit 170 controls the display unit 140 to display the first touch input window. As discussed above, the first touch input window corresponds to a touch input window before its size is adjusted in response to a motion input. For example, FIGS. 2A and 2B correspond to this step.

At step 920, when a motion input such as a tilt input, a rotational acceleration input or a straight acceleration input occurs at the mobile device 100, the detection unit 160 detects such a motion input and transmits a detection signal to the control unit 170. Therefore, the control unit 170 can recognize the type, degree, direction, etc. of the detected motion input.

At step 930, the control unit 170 controls the display unit 140 to display the second touch input window. As discussed above, the second touch input window corresponds to a touch input window adjusted in size in response to a motion input. For example, FIGS. 3A, 3B, 4A and 4B correspond to this step. However, in an alternative exemplary embodiment, if the first touch input window is a size-reduced touch input window as shown in FIGS. 3A, 3B, 4A and 4B, the size-adjusted second touch input window is a size-enlarged touch input window as shown in FIGS. 2A and 2B. Meanwhile, if the detection unit 160 fails to detect a motion input at step 920, the display unit 140 continues to display the first touch input window.

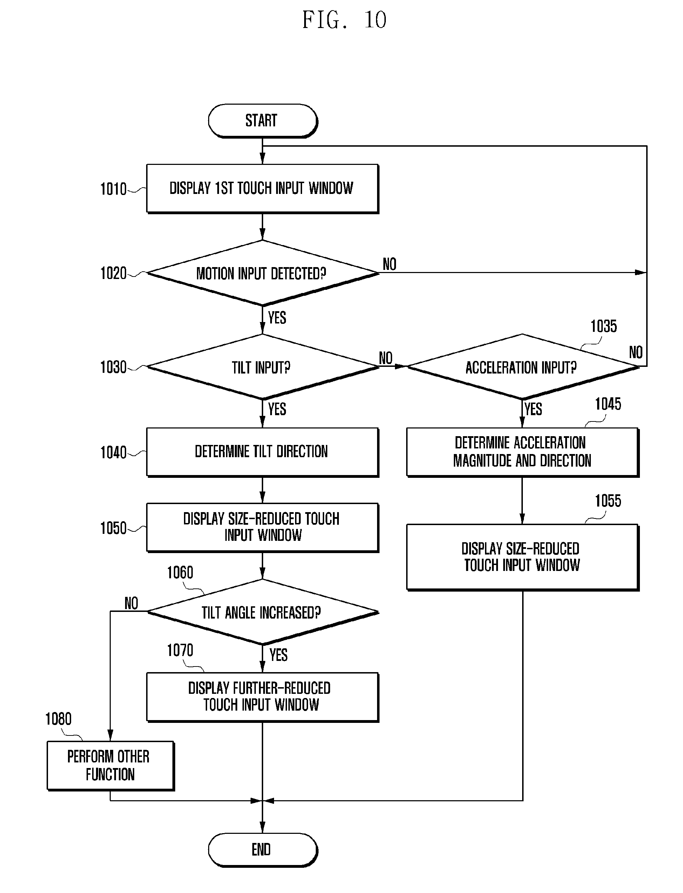

FIG. 10 is a flow diagram illustrating a method for reducing the size of a touch input window in response to a motion input in accordance with exemplary embodiments of the present invention.

Referring to FIG. 10, at step 1010, the control unit 170 controls the display unit 140 to display the first touch input window. As discussed above, the first touch input window corresponds to a touch input window before its size is adjusted in response to a motion input. In this exemplary embodiment, the first touch input window is the default touch input window that is fully displayed on the display unit 140. For example, FIGS. 2A and 2B show the first touch input window.

At step 1020, when a motion input occurs at the mobile device 100, the detection unit 160 detects such a motion input and transmits a detection signal to the control unit 170.

At step 1030, the control unit 170 determines whether the detected motion input is a tilt input.

If the motion input is a tilt input, the control unit 170 determines a tilt direction at step 1040. More specifically, the detection unit 160 detects a descending direction of one lateral side of the mobile device 100 from the horizontal and transmits a detection signal to the control unit 170. Then the control unit 170 can determine a tilt direction.

At step 1050, considering the tilt direction, the control unit 170 reduces the size of the first touch input window to create the size-reduced second touch input window, and controls the display unit 140 to display the second touch input window weighted towards the left side of the screen. For example, FIGS. 3A and 3B show the second touch input window. This step corresponds to a process described previously in FIGS. 5A and 5B.

At step 1060, the detection unit 160 detects an increase in a tilt angle, namely, a further tilt input that occurs in a tilt direction. The detection unit 160 transmits a detection signal to the control unit 170, and thus the control unit 170 determines whether a tilt angle increases.

If a tilt angle increases, the control unit 170 further reduces the size of the first touch input window to create the size-reduced second touch input window at step 1070. The amount of an increase in tilt angle may be proportional to the amount of reduction in size of the first touch input window. Namely, the second touch input window may be continuously reduced in proportion to a tilt angle. Alternatively, the second touch input window may be reduced gradually, depending on given intervals of tilt angle. A way of displaying the second touch input window may be selected and optimized experimentally.

Meanwhile, if a tilt angle is not increased any more at step 1060, the control unit 170 performs another function at step 1080. No further increase in tilt angle may mean that a user regards a currently displayed touch input window as having a suitable size for entering a touch input. Therefore, any action at this step may often correspond to a normal touch input. Alternatively, a user may feel that a touch input window is displayed with an unnecessarily smaller size. In this case, the detection unit 160 may detect a tilt input in the opposite direction of a current tilt direction at step 1080. This corresponds to a process described previously in FIG. 7.

Meanwhile, if the detected motion input is not a tilt input at step 1030, the control unit 170 determines whether the detected motion input is an acceleration input at step 1035. If the detected motion input is not an acceleration input, or if a motion input is not detected at step 1020, the display unit 140 still displays the first touch input window at step 1010.

In contrast, if the detected motion input is an acceleration input at step 1030, the control unit 170 determines the magnitude and direction of acceleration at step 1045.

At step 1055, the control unit 170 reduces the size of the first touch input window to create the size-reduced second touch input window, and controls the display unit 140 to display the second touch input window weighted towards the detected direction of acceleration. The amount of reduction in size of the first touch input window may depend on the magnitude of acceleration predefined in the memory unit 150.

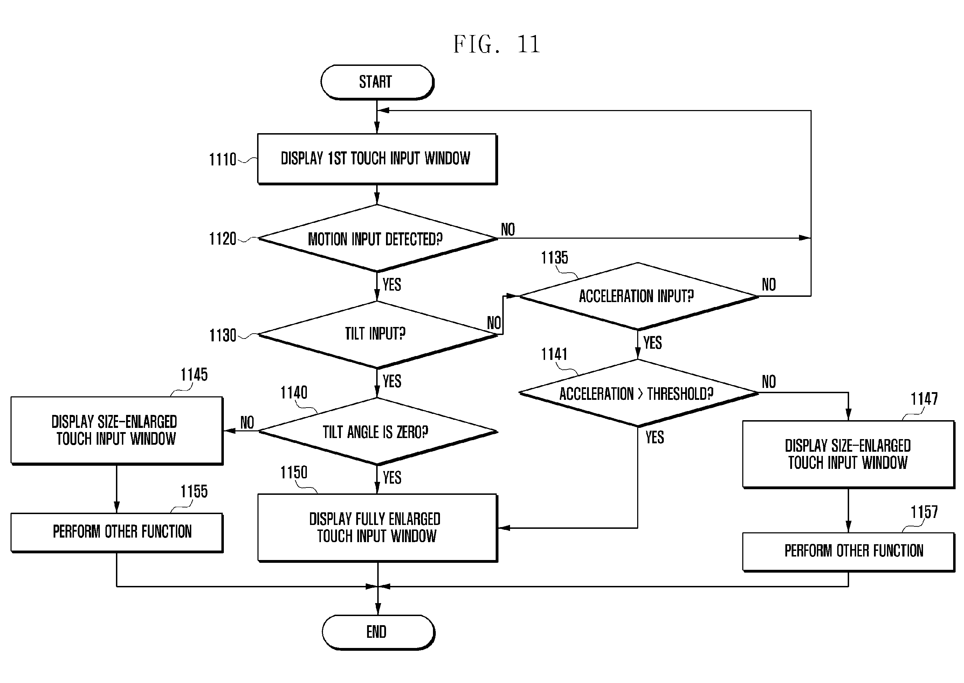

FIG. 11 is a flow diagram illustrating a method for restoring a touch input window to a default touch input window in accordance with exemplary embodiments of the present invention.

Referring to FIG. 11, at step 1110, the control unit 170 controls the display unit 140 to display the first touch input window. As discussed above, the first touch input window corresponds to a touch input window before its size is adjusted in response to a motion input. In this exemplary embodiment, the first touch input window is a size-reduced touch input window that is partially displayed on the display unit 140. For example, FIGS. 3A and 3B show the first touch input window in this exemplary embodiment.

At step 1120, when a motion input occurs at the mobile device 100, the detection unit 160 detects such a motion input and transmits a detection signal to the control unit 170.

At step 1130, the control unit 170 determines whether the detected motion input is a tilt input.

If the detected motion input is a tilt input, the control unit 170 receives a detection signal from the detection unit 160 and determines a tilt direction at step 1140. A tilt direction refers to a descending direction of one lateral side of the mobile device 100 from the horizontal. At this step, the control unit 170 determines whether a tilt angle approaches zero, namely, whether the mobile device 100 reaches a horizontal state.

When the mobile device 100 reaches a horizontal state, the control unit 170 enlarges the size of the first touch input window to create the size-enlarged second touch input window, and controls the display unit 140 to display the second touch input window at step 1150. At this step, the second touch input window corresponds to the default touch input window that is fully displayed on the display unit 140. For example, FIGS. 2A and 2B show the second touch input window in this exemplary embodiment.

If the mobile device 100 does not yet reach a horizontal state, the control unit 170 enlarges the size of the first touch input window in proportion to a tilt angle and controls the display unit 140 to display the size-enlarged second touch input window at step 1145. The amount of a decrease in tilt angle may be proportional to the amount of enlargement in size of the first touch input window. Namely, the second touch input window may be continuously enlarged in proportion to a tilt angle. Alternatively, the second touch input window may be enlarged step by step, depending on given intervals of tilt angle. A way of displaying the second touch input window may be selected and optimized experimentally.

At step 1155, the control unit 170 performs another function. At this step, a normal touch input may occur. Alternatively, if a touch input window is displayed with unnecessarily greater size, the control unit 170 may reduce the size of a touch input window in response to a tilt input in the opposite direction.

Meanwhile, if the detected motion input is not a tilt input at step 1130, the control unit 170 determines whether the detected motion input is an acceleration input at step 1135. If the detected motion input is not an acceleration input, or if a motion input is not detected at step 1120, the display unit 140 still displays the first touch input window at step 1110.

In contrast, if the detected motion input is an acceleration input at step 1130, the control unit 170 determines the magnitude and direction of acceleration at step 1141. If the acceleration magnitude is greater than a given threshold at step 1141, the display unit 140 displays the size-enlarged second touch input window at step 1150. At this step, the second touch input window corresponds to the default touch input window that is fully displayed on the display unit 140.

If the acceleration magnitude is not greater than a given threshold at step 1141, at step 1147 the control unit 170 enlarges the size of the first touch input window to create the size-enlarged second touch input window, and controls the display unit 140 to display the second touch input window weighted towards the detected direction of acceleration. The amount of enlargement in size of the first touch input window may depend on the magnitude of acceleration predefined in the memory unit 150.

At step 1157, the control unit 170 performs another function. At this step, a normal touch input may occur. Alternatively, if a touch input window is displayed with unnecessarily greater size, the control unit 170 may reduce the size of a touch input window in response to a tilt input in the opposite direction.

Certain aspects of the present invention can also be embodied as computer readable code on a computer readable recording medium. A computer readable recording medium is any data storage device that can store data which can be thereafter read by a computer system. Examples of the computer readable recording medium include Read-Only Memory (ROM), Random-Access Memory (RAM), CD-ROMs, magnetic tapes, floppy disks, and optical data storage devices. The computer readable recording medium can also be distributed over network coupled computer systems so that the computer readable code is stored and executed in a distributed fashion. Also, functional programs, code, and code segments for accomplishing the present invention can be easily construed by programmers skilled in the art to which the present invention pertains.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for adjusting the size of a touch input window in a mobile device, the method comprising:
displaying a first touch input window;
detecting at least one motion input for adjusting the size of the first touch input window; and
displaying a second touch input window that results from a size adjustment of the first touch input window according to the detected motion input.

2. The method of claim 1, wherein the displaying of the second touch input window includes reducing the size of the first touch input window towards a first side of the display unit and displaying the size-reduced second touch input window to be weighted towards the first side on the display unit.

3. The method of claim 2, wherein the displaying of the second touch input window includes, if the motion input is a tilt input, reducing the size of the first touch input window according to an increase in a tilt angle of the tilt input and displaying the size-reduced second touch input window on the display unit.

4. The method of claim 2, wherein the displaying of the second touch input window includes, if the motion input is an acceleration input, reducing the size of the first touch input window according to a magnitude of the acceleration input and displaying the size-reduced second touch input window on the display unit.

5. The method of claim 4, wherein the first side of the display unit towards which the size-reduced second touch input window is weighted is determined depending on a direction of the acceleration input.

6. The method of claim 1, wherein the displaying of the second touch input window includes enlarging the size of the first touch input window, weighted towards a first side of the display unit, towards a second side of the display unit and displaying the size-enlarged second touch input window on the display unit.

7. The method of claim 6, wherein the displaying of the second touch input window includes, if the motion input is a tilt input, enlarging the size of the first touch input window according to a decrease in a tilt angle of the tilt input and displaying the size-enlarged second touch input window on the display unit.

8. The method of claim 6, wherein the displaying of the second touch input window includes, if the motion input is an acceleration input, enlarging the size of the first touch input window according to a magnitude of the acceleration input and displaying the size-reduced second touch input window on the display unit.

9. A mobile device for adjusting the size of a touch input window, the device comprising:
a display unit configured to selectively display one of a first touch input window and a second touch input window;
a detection unit configured to detect at least one motion input for adjusting the size of the first touch input window displayed on the display unit; and
a control unit configured to adjust the size of the first touch input window according to the detected motion input, and to enable the display unit to display, instead of the first touch input window, the second touch input window that results from a size adjustment of the first touch input window.

10. The mobile device of claim 9, wherein the control unit is further configured to reduce the size of the first touch input window towards a first side of the display unit, and to control the display unit to display the size-reduced second touch input window to be weighted towards the first side.

11. The mobile device of claim 10, wherein the control unit is further configured to, if the motion input is a tilt input, reduce the size of the first touch input window according to an increase in a tilt angle of the tilt input, and to control the display unit to display the size-reduced second touch input window.

12. The mobile device of claim 10, wherein the control unit is further configured to, if the motion input is an acceleration input, reduce the size of the first touch input window according to a magnitude of the acceleration input, and to control the display unit to display the size-reduced second touch input window.

13. The mobile device of claim 9, wherein the control unit is further configured to enlarge the size of the first touch input window, weighted towards a first side of the display unit, towards a second side of the display unit, and to control the display unit to display the size-enlarged second touch input window.

14. The mobile device of claim 13, wherein the control unit is further configured to, if the motion input is a tilt input, enlarge the size of the first touch input window according to a decrease in a tilt angle of the tilt input, and to control the display unit to display the size-enlarged second touch input window.

15. The mobile device of claim 13, wherein the control unit is further configured to, if the motion input is an acceleration input, enlarge the size of the first touch input window according to a magnitude of the acceleration input, and to control the display unit to display the size-reduced second touch input window.
